Europäisches Patentamt

(19) European Patent Office

Office européen des brevets

(11) Numéro de publication: **0 168 272**
**A1**

(12) **DEMANDE DE BREVET EUROPEEN**

(21) Numéro de dépôt: **85400988.3**

(22) Date de dépôt: **21.05.85**

(51) Int. Cl.⁴: **H 04 N 9/64**

(30) Priorité: **24.05.84 FR 8408140**

(43) Date de publication de la demande:
**15.01.86 Bulletin 86/3**

(84) Etats contractants désignés:
**DE GB NL**

(71) Demandeur: **THOMSON VIDEO EQUIPEMENT**
**94, rue du Fossé Blanc**
**F-92230 Gennevilliers(FR)**

(72) Inventeur: **Artigalas, Max**
**THOMSON-CSF SCPI 173, bld Haussmann**
**F-75379 Paris Cedex 08(FR)**

(72) Inventeur: **Chambaut, Jean**
**THOMSON-CSF SCPI 173, bld Haussmann**
**F-75379 Paris Cedex 08(FR)**

(74) Mandataire: **Lincot, Georges et al,**
**THOMSON-CSF SCPI 173, Bld Haussmann**
**F-75379 Paris Cedex 08(FR)**

(54) Dispositif numérique pour filtrer et sous-échantillonner deux signaux de différence de couleur.

㉗ L'invention concerne un dispositif utilisable dans un studio de télévision numérique pour filtrer et sous-échantillonnner deux signaux de différence de couleur dont les valeurs DR et DB sont représentées respectivement par deux mots binaires appliqués simultanément à deux bornes d'entrée 10 et 11. Le dipositif selon l'invention restitue séquentiellement des valeurs filtrées et sous-échantillonnées dans un rapport deux, par un calcul prenant en compte toutes les valeurs d'entrée, mais qui est réalisé pour une valeur filtrée sur deux de chaque signal de différence de couleur.

Le dispositif comporte : un premier et un second ensemble de registres à décalage (1 et 2) fournissant cinq valeurs retardées du premier signal et cinq valeurs retardées du second signal; un multiplexeur (3) qui aiguille soit les valeurs du premier signal soit les valeurs du second signal vers les entrées d'un dispositif de calcul (4); ce dispositif de calcul (4) déterminant une combinaison linéaire des valeurs appliquées à ces entrées, à une fréquence qui est égale à la fréquence d'échantillonnage de chacun des deux signaux de différence de couleur.

Application aux équipements de studio de télévision numérique.

Fig.2

Dispositif numérique pour filtrer et sous-échantillonner
deux signaux de différence de couleur

L'invention concerne un dispositif qui constitue une partie de l'équipement d'un studio de télévision numérique. Dans un tel studio, chaque dispositif analyseur d'image, caméra ou analyseur d'image fixe, fournit en parallèle, et avec une bande passante identique, trois signaux de couleur : rouge, vert, bleu. Chacun de ces signaux est échantillonné à la fréquence $F_{ech}$ = 13,5 MHz et est codé par un mot binaire de onze bits. La transmission ou le traitement des images n'est pas réalisée au moyen des trois signaux de couleur, mais au moyen d'un signal de luminance et de deux signaux de différence de couleur générés à partir des trois signaux de couleur. Si R, V, et B sont les valeurs des trois signaux de couleur à un instant donné, la valeur Y de la luminance est calculée selon la formule :

$$Y = 0,299\,R + 0,114\,B + 0,587\,V$$

La valeur du signal de différence de couleur rouge est déterminée selon la formule :

$$DR = \alpha_R\,(R - Y)$$

La valeur du signal de différence de couleur bleu est déterminée selon la formule :

$$DB = \alpha_B\,(B - Y)$$

Les coefficients $\alpha_R$ et $\alpha_B$ sont des constantes qui tiennent compte de la différence de sensibilité de l'oeil en fonction de la couleur. Les valeurs de ces trois signaux sont codées chacune par un mot binaire de huit bits mais la bande passante des deux signaux de différence de couleur est réduite (1,5 MHz) par rapport à la bande passante du signal de luminance (5,5 MHz). Cette réduction de la bande passante des signaux des différences de couleur correspond à une suppression d'informations qui sont redondantes car elles sont contenues dans le signal de luminance, et qui ne sont pas nécessaires pour une bonne restitution de l'image compte tenu des caractéristiques de perception de l'oeil. D'autre part, les normes de transmission des signaux de télévision numérique prévoient que les valeurs Y, DR, DB sont transmises séquentiellement, et non pas simultanément, à la fréquence de 27 MHz et dans l'ordre suivant :

DB, Y, DR, Y, DB, Y, DR, Y, ...

Cette séquence correspond à quatre points d'image, une valeur Y étant transmise pour chaque point d'image, une valeur DB et une valeur DR étant transmises pour chaque couple de points d'image. Les signaux de différence de couleur sont donc sous-échantillonnés à la fréquence $\frac{F_{ech}}{2}$ = 6,75 MHz par rapport aux signaux de couleur qui sont échantillonnés à la fréquence $F_{ech}$ = 13,5 MHz et dont les valeurs R, V, B sont utilisées pour calculer les valeurs DR et DB.

Par le théorème de Shannon, il est connu que la fréquence d'échantillonnage d'un signal doit être au moins égale à deux fois la fréquence maximale du spectre de ce signal. Le spectre du signal échantillonné est constitué d'une multitude de spectres élémentaires centrés sur les fréquences multiples de la fréquence d'échantillonnage et dont la largeur est égale à la largeur du spectre du signal avant échantillonnage. Si le théorème de Shannon n'est pas respecté ces spectres élémentaires se chevauchent, le spectre élémentaire centré sur la fréquence 0 est perturbé comme s'il y avait un repliement de la partie supérieure de ce spectre élémentaire. Pour éviter un repliement du spectre d'un signal échantillonné à la fréquence $\frac{F_{ech}}{2}$= 6,75 MHz, il est nécessaire que le signal à échantillonner ait une bande passante inférieure ou égale à $\frac{F_{ech}}{4}$= 3,375 MHz.

Un équipement de télévision numérique doit donc comporter une interface recevant simultanément les valeurs R, V, B codées chacune par un mot binaire de onze bits, déterminant simultanément les valeurs Y, DR, et DB codées chacune par un mot binaire de huit bits, filtrant la suite des valeurs DR et la suite des valeurs DB pour réduire sa bande passante à 3,375 MHz, prélevant une valeur sur deux dans chaque suite, et enfin multiplexant temporellement les valeurs DB, Y, et DR.

Il est connu de réaliser des filtres passe-bas numériques qui permettraient de filtrer la suite des valeurs DR pour limiter sa bande passante à 3,75 MHz avant de la sous-échantillonner à la fréquence de 6,75 MHz. Un second filtre, identique, pourrait être prévu pour réaliser la même opération sur la suite des valeurs DB. La recherche d'une réduction du coût de réalisation de cet équipement conduit à rechercher une simplification de ces filtres.

Il est connu par la demande de brevet français n° 2 316 806 d'utiliser un même filtre numérique pour filtrer trois signaux distincts échantillonnés à une même fréquence. Les valeurs de ces trois signaux sont multiplexées dans le temps avant de les appliquer à une entrée du filtre, et elles sont démultiplexées à la sortie du filtre. Le filtre a une fréquence d'horloge égale à trois fois la fréquence d'échantillonnage de chacun de ces signaux. Ce procédé est avantageux lorsque les trois signaux doivent subir des filtrages identiques et à condition que la fréquence d'échantillonnage permette de multiplier la fréquence d'horloge du filtre sans rencontrer de difficultés dues aux limitations de la technologie des circuits intégrés actuellement disponibles pour réaliser ce filtre.

Dans le cas considéré, le filtrage doit être réalisé sur deux suites de valeurs échantillonnées à la fréquence de 13,5 MHz, par conséquent ce procédé nécessiterait une fréquence d'horloge de 27 MHz pour les moyens de calcul du filtre, ce qui impliquerait l'emploi de la technologie ECL, qui est beaucoup plus coûteuse et beaucoup plus complexe à utiliser que des technologies plus lentes telles que la technologie dite TTL FAST (Fairchild Fast Advanced Transistor Transistor Logic) commercialisée par la Société FAIRCHILD. Il est à remarquer que le sous-échantillonnage à la fréquence de 6,75 MHz ne peut être réalisé à l'entrée du filtre, puisque ce filtre a précisément pour fonction de réduire la bande passante des signaux avant de réaliser le sous-échantillonnage, afin d'éviter le phénomène de repliement du spectre qui se traduirait par une dégradation de l'image.

L'objet de l'invention est un dispositif numérique pour filtrer et sous-échantillonner les deux signaux de différence de couleur, plus simple et donc moins coûteux que deux filtres classiques utilisés en parallèle, et qui est réalisable au moyen de la technologie TTL FAST.

Selon l'invention, un dispositif numérique pour filtrer et sous-échantillonner deux signaux de différence de couleur, est caractérisé en ce qu'il comporte :

- un premier et un second ensemble de registres à décalage recevant respectivement une première suite de valeurs d'un premier signal de différence de couleur, et une seconde suite de valeurs d'un second signal de différence de couleur, à une fréquence $F_{ech}$, et restituant en parallèle un nombre fixé de valeurs de cette première suite et de cette seconde suite ;

- un multiplexeur pour transmettre alternativement les valeurs fournies par le premier ensemble et celles fournies par le second ensemble, à la fréquence $F_{ech}$ ;

- des moyens de calcul pour calculer, à la fréquence $F_{ech}$, une valeur déterminée à partir des valeurs transmises par le multiplexeur, selon une fonction connue réalisant un filtrage passe-bas dont la bande passante est inférieure ou égale à $\frac{F_{ech}}{4}$, la suite des valeurs ainsi calculées étant constituée alternativement d'une valeur du premier et d'une valeur du second signal de différence de couleur filtré et sous-échantillonné dans un rapport deux.

L'invention sera mieux comprise et d'autres détails apparaîtront à l'aide de la description ci-dessous et des figures l'accompagnant :

- la figure 1 représente le schéma synoptique d'un exemple de réalisation d'une interface comportant un dispositif selon l'invention ;

- la figure 2 représente un schéma synoptique d'un exemple de réalisation du dispositif selon l'invention.

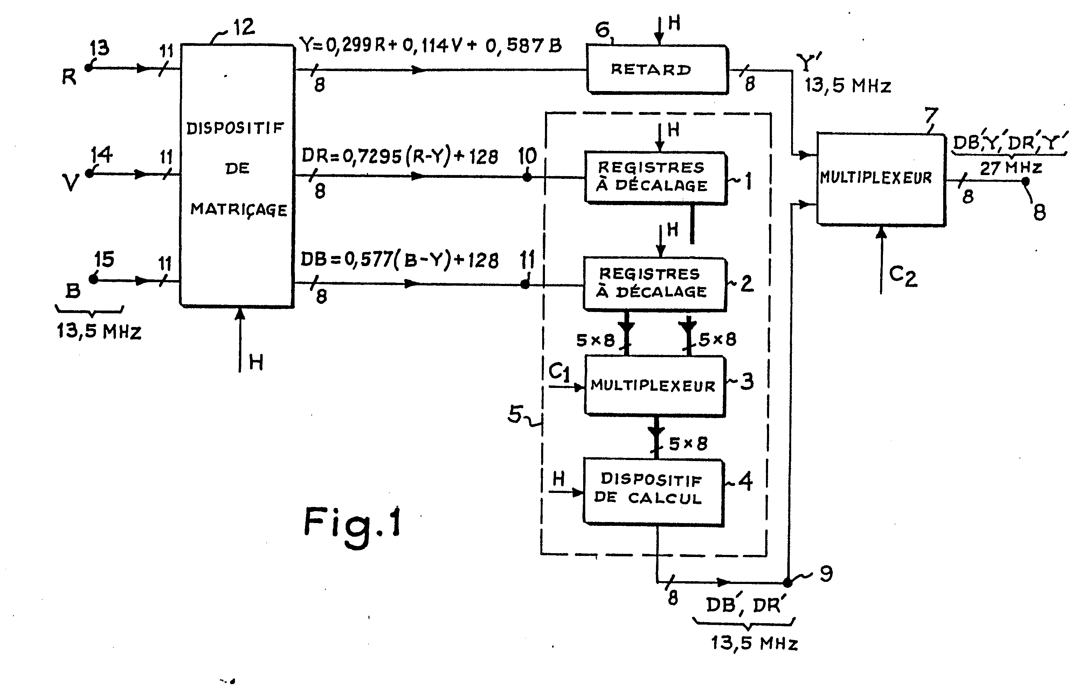

L'interface représentée sur la figure 1 reçoit simultanément une valeur R sur une bande d'entrée 13, une valeur V sur une borne d'entrée 14 et une valeur B sur une borne d'entrée 15 à la fréquence d'échantillonnage de 13,5 MHz, et elle restitue sur une borne de sortie 8 des valeurs DB, Y, et DR en série, à la fréquence de 27 MHz. Cet exemple d'interface comporte un dispositif 12 dit de matriçage, un dispositif à retard 6, un multiplexeur 7, et un dispositif 5 selon l'invention. L'ensemble de cette interface est réalisé au moyen de circuits intégrés de technologie TTL FAST. Le dispositif 12 de matriçage possède trois entrées reliées respectivement aux trois bornes d'entrée 13, 14 et 15 pour recevoir trois mots binaires de onze bits codant les valeurs R, V et B. Il possède trois sorties fournissant chacune un mot binaire de huit bits codant respectivement les valeurs Y, DR, et DB calculées selon les formules :

$$Y = 0,299 R + 0,114 B + 0,587 V$$
$$DR = 0,7295 (R - Y) + 128$$
$$DB = 0,577 (B - Y) + 128$$

Les coefficients utilisés pour le calcul de Y tiennent compte de la sensibilité relative de l'oeil pour chacune des couleurs. Les coefficients utilisés pour le calcul de DR et DB tiennent compte de la différence entre les échelles de quantification utilisées pour les signaux de couleur (220 niveaux représentent un signal positif) et les échelles de quantification utilisées pour les signaux de différence de couleur (225 niveaux représentent un signal à valeur positive ou négative). La réalisation de ce dispositif 12 ne sera pas décrite plus en détails car elle est à la portée de l'homme de l'art. Trois sorties du dispositif 12 fournissent les valeurs Y, DR, et DB codées chacune par un mot binaire de huit bits, à une entrée du dispositif à retard 6, et à deux bornes d'entrée 10 et 11 du dispositif 5.

Le dispositif 5 filtre numériquement les deux signaux de différence de couleur pour réduire leur bande passante à 3,375 MHz et restituer séquentiellement des valeurs DB' et DR' filtrées, à la fréquence de 13,5 MHz. Ces valeurs sont fournies sous la forme d'un mot binaire de huit bits à une première entrée du multiplexeur 7. Une seconde entrée du multiplexeur 7 est reliée à une sortie du dispositif à retard 6 qui restitue, avec un retard correspondant à six périodes d'échantillonnage, des valeurs Y' codées par un mot binaire de huit bits, à la fréquence de 13,5 MHz. Le dispositif à retard 6 permet de compenser le retard provoqué par le dispositif 5 sur les valeurs des signaux de différence de couleur. Une sortie du multiplexeur 7 est reliée à une borne de sortie 8 de l'interface et lui fournit un mot binaire de huit bits qui est constitué soit par une valeur DB', soit par une valeur Y', soit par une valeur DR', ces trois valeurs étant transmises séquentiellement à la fréquence de 27 MHz.

Le dispositif 5 doit éliminer les fréquences supérieures à 3,375 MHz tout en causant le moins possible de distorsion de phase, car celle-ci crée un phénomène de flou sur l'image restituée, phénomène qui est très facilement perceptible par l'oeil. Le dispositif 5 doit donc être linéaire en phase pour obtenir un temps de propagation de groupe constant. Il est connu divers dispositifs de filtrage numérique à phase linéaire et à réponse impulsionnelle finie. L'un de ces dispositifs comporte une série de registres reliés en série pour stocker et retarder les valeurs du signal à filtrer, des sorties intermédiaires fournissant ces valeurs respectivement à des entrées d'un dispositif de calcul déterminant la valeur d'une combinaison linéaire de ces valeurs. La sortie du dispositif de calcul constitue la sortie du filtre.

Le dispositif 5 est une adaptation d'un tel dispositif connu.

Il comporte un dispositif de calcul 4 et un ensemble 1 de registres à décalage analogues à ceux qui seraient employés pour filtrer un signal unique. Il est prévu un second ensemble de registres à décalage, 2, et un multiplexeur 3, pour permettre le filtrage d'un second signal au moyen du même dispositif de calcul 4. Des moyens de commande non représentés sur la figure 1 fournissent aux ensembles 1 et 2 et au dispositif 4 un signal d'horloge H de fréquence 13,5 MHz, et fournissent un signal de commande $C_1$ au multiplexeur 3.

La réalisation d'un dispositif de calcul pour un filtre numérique traitant un seul signal est décrite notamment dans :

- TECHNIQUES FOR DESIGNING FINITE-DURATION IMPULSE RESPONSE DIGITAL FILTERS, par L. RABINER (I.E.E.E. Trans. Commun. Technol. - Avril 1971)

qui présente différentes méthodes d'approximation pour les filtres à réponse impulsionnelle finie. L'estimation du nombre des coefficients d'un tel filtre passe-bas est précisée dans :

- APPROXIMATE DESIGN RELATIONSHIPS FOR LOW-PASS FIR DIGITAL FILTERS, par L. RABINER (IEEE Trans. on Audio and Electro-acoustics - Octobre 1973)

La méthode d'approximation de la fonction de transfert d'un filtre au sens de Tchebycheff est traitée dans les articles :

- CHEBYSHEV APPROXIMATION FOR NON RECURSIVE DIGITAL FILTERS WITH LINEAR PHASE, par T. PARKS et J. MC CLELLAN (IEEE Transactions on circuit theory - Mars 1972)

- FIR DIGITAL FILTER DESIGN TECHNIQUES USING WEIGHTED CHEBYSHEV APPROXIMATION par L. RABINER, J. MC CLELLAN, T. PARKS (Proceeding of the IEEE - Avril 1975).

Dans cet exemple le dispositif de calcul 4 calcule une valeur DB' du signal filtré, selon la formule :

$y_1(n) = -0,0625 \, x_1(n) + 0,3125 \, x_1(n-2) + 0,5 \, x_1(n-3) + 0,3125 \, x_1(n-4) - 0,0625 \, x_1(n-6)$

pour obtenir une $n^{\text{ième}}$ valeur $y_1(n)$ du signal de différence de couleur bleu, $x_1(i)$ étant la valeur de rang i du signal DB non filtré, et n étant une valeur entière supérieure à 7 ;

et selon la formule :

$y_2(n) = -0,0625 \, x_2(n-1) + 0,3125 \, x_2(n-3) + 0,5 \, x_2(n-4) + 0,3125 \, x_2(n-5) - 0,0625 \, x_2(n-7)$

pour obtenir une $n^{\text{ième}}$ valeur $y_2(n)$ du signal de différence de couleur rouge, $x_2(i)$ étant la valeur de rang i du signal DR non filtré.

Le décalage d'un rang entre les valeurs $x_1$ et les valeurs $x_2$ correspond à un décalage temporel d'une période d'échantillonnage procuré par l'ensemble 1 qui comporte un étage de plus que l'ensemble 2. Ce décalage permet d'alterner le calcul de $y_1(n)$ et de $y_2(n)$ dans le dispositif de calcul 4. Il est à noter qu'en alternant le calcul de $y_1$ et de $y_2$, à la fréquence $F_{\text{ech}} = 13,5 \, \text{MHz}$, le dispositif de calcul 4 ne détermine qu'une valeur filtrée sur deux, et réalise ainsi un sous-échantillonnage, tout en prenant en compte l'ensemble des valeurs $x_1$ pour calculer $y_1$ et l'ensemble des valeurs $x_2$ pour calculer $y_2$ comme le ferait deux filtres indépendants travaillant en parallèle.

L'algorithme utilisé est celui de Mc CLELLAN et TARKS, fondé sur la méthode de REMEZ. Cet exemple de réalisation présente l'avantage d'avoir deux coefficients nuls : les coefficients de $x(n-1)$ et $x(n-5)$ et d'avoir des coefficients décomposables en une somme de puissance de 1/2 :

$$-0,0625 = -2^{-4} \text{ et } 0,3125 = 2^{-4} + 2^{-6}$$

Cette dernière propriété permet de réaliser le dispositif de calcul 4 sans utiliser de multiplicateurs, qui sont coûteux lorsqu'ils sont capables de fonctionner à 13,5 MHz, la multiplication étant ramenée à une suite d'additions de nombres binaires dont les bits sont décalés de manière appropriée. Les coefficients ainsi choisis permettent de réaliser un filtrage dont la bande passante est égale au quart de la fréquence d'horloge du dispositif de calcul 4, c'est-à-dire 3,375 MHz.

Le premier et le second ensemble de registres à décalage, 1 et 2, possèdent chacun une entrée série pouvant recevoir un mot binaire de huit bits et reliée respectivement à la borne d'entrée 10 et à la borne d'entrée 11. Ils possèdent chacun des sorties parallèles fournissant cinq mots de huit bits. Les sorties parallèles de l'ensemble 1 sont reliées à des premières entrées du multiplexeur 3 et les sorties parallèles de l'ensemble 2 sont reliées à des secondes entrées du multiplexeur 3. Le multiplexeur 3 possède une sortie multiple fournissant cinq mots binaires de huit bits à une entrée multiple du dispositif de calcul 4. Une sortie du dispositif 4 constitue la sortie du dispositif 5.

Les moyens de commande du dispositif 5 fournissent aussi un signal de commande $C_2$ au multiplexeur 7. Le signal d'horloge H est appliqué aussi à des entrées d'horloge du dispositif de matriçage 12 et du dispositif 6. Le signal de commande $C_1$ commande le multiplexeur 3 pour qu'il transmette alternativement, à la fréquence de 6,75 MHz, les valeurs présentes sur ses premières entrées ou les valeurs présentes sur ses secondes entrées. Le signal de commande $C_2$ est appliqué à une entrée de commande du multiplexeur 7 pour que celui-ci relie sa sortie alternativement à sa première et à sa seconde entrée à la fréquence de 27 MHz.

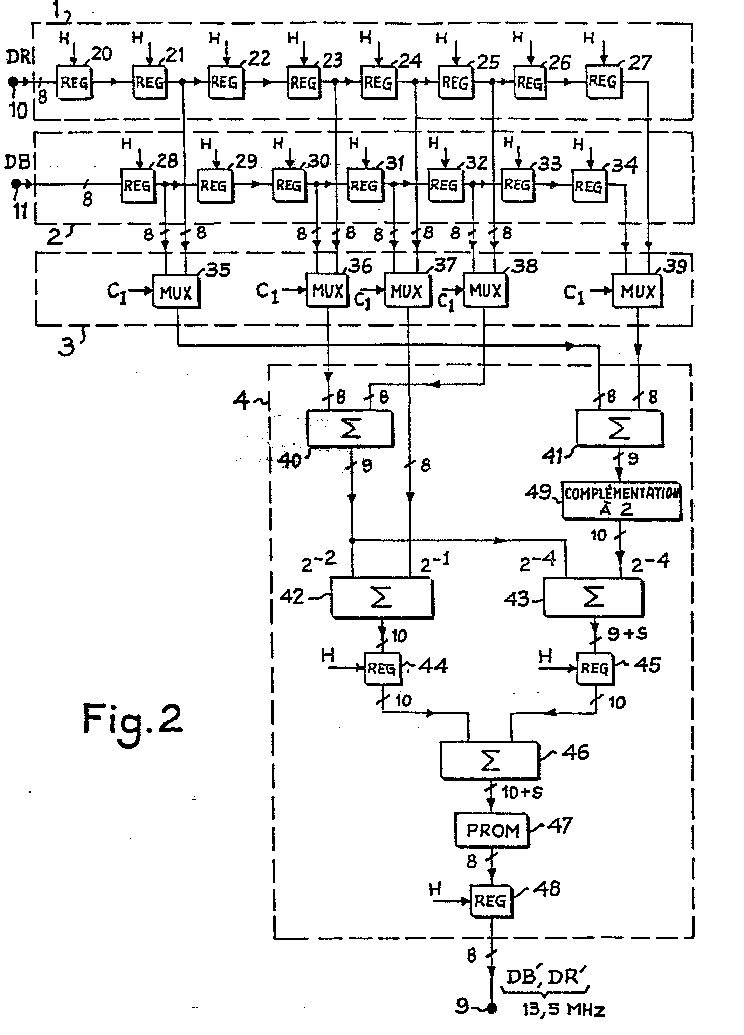

La figure 2 représente le schéma synoptique plus détaillé de cet exemple de réalisation du dispositif 5. L'ensemble 1 de registres à décalage est constitué de huit registres 20 à 27 reliés en série dans cet ordre, la borne d'entrée 10 étant reliée à une entrée multiple du registre 20. Chaque registre 20 à 27 a une entrée d'horloge recevant le signal H pour enregistrer un mot de huit bits transmis par le registre qui le précède. L'ensemble 1 possède cinq sorties multiples reliées respectivement à la sortie du registre 21, du registre 23, du registre 24, du registre 25 et du registre 27. Chacune de ces sorties fournit une valeur codée par un mot binaire de huit bits à une entrée multiple du multiplexeur 3.

L'ensemble 2 de registres à décalage est constitué de sept registres 28 à 34 reliés en série dans cet ordre, la borne d'entrée 11 étant reliée à une entrée multiple du registre 28. Chaque registre 28 à 34 possède une entrée d'horloge recevant le signal H. L'ensemble 2 possède cinq sorties multiples reliées respectivement à la sortie du registre 28, du registre 30, du registre 31, du registre 32 et du registre 34. Ces sorties sont reliées respectivement à cinq entrées multiples du multiplexeur 3 et fournissent chacune une valeur codée par un mot binaire de huit bits.

Le multiplexeur 3 est constitué de cinq circuits intégrés multiplexeurs (MUX), 35 à 39, ayant chacun une première et une seconde entrée pouvant être reliées à une sortie pour transmettre un mot binaire de huit bits, en fonction du signal de commande $C_1$ qui est appliqué à chacun de ces circuits intégrés multiplexeurs. Les sorties de ces circuits intégrés multiplexeurs 35 à 39 constituent les cinq sorties du multiplexeur 3 qui fournissent chacune un mot binaire de huit bits.

Le dispositif de calcul 4 comporte cinq additionneurs numériques, 40 à 43, et 46 ; un dispositif 49 de complémentation à deux ; trois registres 44, 45, et 48 ; et une mémoire morte (PROM) 47. L'additionneur 40 possède deux entrées recevant chacune un mot binaire de huit bits fourni respectivement par la sortie du circuit intégré multiplexeur 36 et la sortie du circuit intégré multiplexeur 38. L'additionneur 41 possède deux entrées recevant chacune un mot binaire de huit bits fourni respectivement par la sortie du circuit intégré multiplexeur 35 et par la sortie du circuit intégré multiplexeur 39.

L'additionneur 40 possède une sortie fournissant un mot binaire de neuf bits à une première entrée de l'additionneur 42, ces neuf bits étant décalés de deux rangs pour diviser par quatre la valeur fournie à l'additionneur 42. L'additionneur 42 possède une seconde entrée recevant un mot binaire de huit bits fourni par la sortie du circuit intégré multiplexeur 37. D'autre part, la sortie de l'additionneur 40 est reliée à une première entrée de l'additionneur 43 pour lui fournir un mot binaire de neuf bits, ces neuf bits étant décalés de quatre rangs pour diviser par seize la valeur fournie à l'additionneur 43. L'additionneur 43 possède une autre entrée recevant un mot binaire de dix bits fourni par une sortie du dispositif 49 de complémentation à deux, ces dix bits étant décalés de quatre rangs pour diviser par seize la valeur fournie à l'additionneur 43. Le dispositif 49 possède une entrée recevant un mot binaire de neuf bits fourni par la sortie de l'additionneur 41. Une sortie de l'additionneur 42 fournit un mot binaire de dix bits à une entrée multiple du registre 44. Une sortie de l'additionneur 43 fournit un mot binaire de neuf bits plus un bit de signe S à une entrée multiple du registre 45.

Une sortie du registre 44 et une sortie du registre 45 fournissent chacune un mot binaire de dix bits respectivement à deux entrées de l'additionneur 46. Une sortie de l'additionneur 46 fournit un mot binaire de dix bits plus un bit de signe S à une entrée d'adresse de la mémoire morte 47. Une sortie de données de la mémoire morte 47 fournit un mot binaire de huit bits à une entrée multiple du registre 48. Une sortie de ce registre 48 constitue la sortie du dispositif de calcul 4 et est donc reliée à la borne de sortie 9 pour lui fournir un mot binaire de huit bits. Les registres 44, 45, et 48 possèdent chacun une entrée d'horloge recevant le signal d'horloge H.

Pour décrire le fonctionnement de cet exemple de réalisation, considérons un par un chaque terme de la formule donnant la valeur calculée y(n). A l'instant considéré la valeur x(n) est fournie, par exemple, par la sortie du registre 28 et est transmise par le circuit intégré multiplexeur 35 à l'additionneur 41. Le dispositif 49 réalise un changement de signe. Le décalage du mot binaire que fournit la sortie du dispositif 42 réalise une division par seize correspondant au coefficient 0,0625. La valeur x(n-2) est fournie dans cet exemple par la sortie du registre 30, et est transmise par le circuit intégré multiplexeur 36 à l'additionneur 40. Le mot binaire de neuf bits fourni par la sortie de l'additionneur 40 est appliqué avec un décalage de deux rangs à une entrée de l'additionneur 42 et avec un décalage de quatre rangs à une entrée de l'additionneur 43 pour réaliser une multiplication par 1/4 et par 1/16 respectivement. Les valeurs ainsi obtenues sont transmises par les registres tampons 44 et 45 à l'additionneur 46 qui réalise la somme des coefficients 1/4 et 1/16 pour obtenir le coefficient 0,3125.

Le calcul du terme 0,3125 x(n-4) est réalisé de manière analogue, la valeur x(n-4) étant appliquée à l'autre entrée de l'additionneur 40 par l'intermédiaire du circuit intégré multiplexeur 38. Le calcul du terme 0,5 x(n-3) est réalisé à partir de la valeur x(n-3) fournie par la sortie du registre 31 et transmise par le circuit intégré multiplexeur 37 à une entrée de l'additionneur 42 avec un décalage d'un bit réalisant la multiplication par le facteur 1/2. Le terme - 0,0625 x(n-6) est calculé de manière analogue au terme - 0,0625 x(n), en appliquant sur une autre entrée de l'additionneur 41 la valeur x(n-6) qui est fournie par la sortie du registre 34 et qui est transmise par le circuit intégré multiplexeur 39.

L'existence des coefficients négatifs dans la formule de calcul de la valeur du signal filtré modifie l'amplitude de ce signal dans un rapport de 1,25. Dans certains cas il peut donc y avoir débordement du signal filtré au-delà des valeurs 16 et 240 qui constituent les bornes de ces variations selon la norme relative à cette interface de studio. Cette norme exige que les signaux soient codés sur huit bits et que la relation entre le signal de différence de couleur analogique R-Y (respectivement B-Y) et le signal numérisé DR (respectivement DB) soit :

$$(R-Y)_{analogique} = \frac{DR-128}{224}$$

De plus, les niveaux 0 et 255 sont interdits car ils servent à coder des signaux de synchronisation. Pour éviter des débordements jusqu'à 0 ou 255, les valeurs fournies par l'additionneur 46, qui sont codées par 10 bits plus un bit de signe, sont traitées par la mémoire morte 47 qui réalise une fonction de transfert linéaire et de gain unité lorsque la valeur appliquée sur son entrée d'adresses est située dans la gamme 1 à 254 ; qui réalise un écrêtage à la valeur 1 lorsque la valeur appliquée est inférieure à 1, et qui réalise un écrêtage à la valeur 254 lorsque la valeur appliquée est supérieure à 254. En pratique un débordement hors de la gamme 1 à 254 arrive rarement et l'écrêtage ne cause donc pas de perturbations de l'image.

L'invention ne se limite pas aux modes de réalisation décrits ci-dessus et de nombreuses variantes sont à la portée de l'homme de l'art, notamment en ce qui concerne la réalisation du dispositif de calcul 4, le choix des coefficients ainsi que leur nombre.

REVENDICATIONS

1. Dispositif numérique pour filtrer et sous-échantillonner deux signaux de différence de couleur, caractérisé en ce qu'il comporte :

- un premier et un second ensemble de registres à décalage (1, 2) recevant respectivement une première suite de valeurs d'un premier signal de différence de couleur, et une seconde suite de valeurs d'un second signal de différence de couleur, à une fréquence $F_{ech}$, et restituant en parallèle un nombre fixé de valeurs de cette première suite et de cette seconde suite ;

- un multiplexeur (3) pour transmettre alternativement les valeurs fournies par le premier ensemble (1) et celles fournies par le second ensemble (2), à la fréquence $F_{ech}$ ;

- des moyens de calcul (4) pour calculer, à la fréquence $F_{ech}$, une suite de valeurs déterminées à partir des valeurs transmises par le multiplexeur (3), selon une fonction connue réalisant un filtrage passe-bas dont la bande passante est inférieure ou égale à $\frac{F_{ech}}{4}$, la suite des valeurs ainsi calculées étant constituée alternativement d'une valeur du premier et d'une valeur du second signal de différence de couleur filtré et sous-échantillonné dans un rapport deux.

2. Dispositif selon la revendication 1, caractérisé en ce que le premier ensemble (1) de registres à décalage restitue des valeurs : $x_1(n)$, $x_1(n-2)$, $x_1(n-3)$, $x_1(n-4)$, $x_1(n-6)$ ; $x_1(i)$ étant la valeur de rang i du premier signal de différence de couleur et n étant une valeur entière supérieure à 7 ;

en ce que le second ensemble (2) de registres à décalage restitue des valeurs : $x_2(n-1)$, $x_2(n-3)$, $x_2(n-4)$, $x_2(n-5)$, $x_2(n-7)$ ; $x_2(i)$ étant la valeur de rang i du second signal de différence de couleur ;

et en ce que les moyens de calcul (4) déterminent des valeurs $y_1(n)$ et $y_2(n)$ du premier et du second signal de différence de couleur filtrés, selon les formules :

$$y_1(n) = - 0,0625\, x_1(n) + 0,3125\, x_1(n-2) + 0,5\, x_1(n-3) + 0,3125\, x_1(n-4) - 0,0625\, x_1(n-6)$$

$$y_2(n) = - 0,0625\, x_2(n-1) + 0,3125\, x_2(n-3) + 0,05\, x_2(n-4) + 0,3125\, x_2(n-5) - 0,0625\, x_2(n-7).$$

Fig.1

Fig.2

Office européen
des brevets

**RAPPORT DE RECHERCHE EUROPEENNE**

**0168272**
Numéro de la demande

EP 85 40 0988

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| A | SMPTE JOURNAL, vol. 93, no. 1, partie 1, janvier 1984, pages 18-23, Scarsdale, New York, US; K.P. DAVIES: "Some concepts for the digital television studio" * Page 18, colonne du milieu, ligne 4 - colonne de droite, ligne 5; figure 5 * | 1 | H 04 N 9/64 |
| A | GB-A-2 110 047 (RCA) * Page 2, lignes 88-96; page 3, lignes 47-107; figure 1 * | 1 | |
| A | PATENTS ABSTRACTS OF JAPAN, vol. 7, no. 76 (E-167) [1221], 30 mars 1983; & JP - A - 58 3492 (SONY K.K.) 10-01-1983 | 1 | |

**DOMAINES TECHNIQUES RECHERCHES (Int. Cl.4)**

H 04 N 9/64
H 04 N 11/04

Le présent rapport de recherche a été établi pour toutes les revendications

| Lieu de la recherche | Date d'achèvement de la recherche | Examinateur |
|---|---|---|
| LA HAYE | 16-09-1985 | YVONNET J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82